# EUROPÄISCHE PATENTSCHRIFT

(11) **EP 0 330 603 B1**
(45) Veröffentlichungstag und Bekanntmachung des Hinweises auf die Patenterteilung: **05.05.1993**
(21) Anmeldenummer: 89710011.1
(22) Anmeldetag: 23.02.1989
(51) Int. Cl.: B29C 47/16

(54) **Vorrichtung zum Extrudieren von thermoplastischen Kunststoffen durch eine Schlitzdüse, insbesondere eine Breitschlitzdüse**
Apparatus for extruding thermoplastic materials through a slot-die, in particular a flat sheet die
Dispositif d'extrusion de matières thermoplastiques à travers une filière en forme de fente, en particulier une filière plate

(30) Priorität: 24.02.1988 DE 3805774
(43) Veröffentlichungstag der Anmeldung: 30.08.1989
(73) Patentinhaber: Boos, Sigmund, D-78247 Hilzingen (DE)
(72) Erfinder: Boos, Sigmund, D-78247 Hilzingen (DE)
(74) Vertreter: Hiebsch, Gerhard F., Dipl.-Ing.

(56) Entgegenhaltungen:
- EP-A- 0 079 052
- WO-A-86/06678
- DE-A- 2 202 484
- FR-A- 1 525 155
- US-A- 2 963 741
- US-A- 3 039 143
- US-A- 3 067 464
- US-A- 3 293 689
- US-A- 4 125 350
- PATENT ABSTRACTS OF JAPAN, Band 10, Nr. 146 (M-482)[2203], 28. Mai 1986; & JP-A-61 2522 (KAZUO TANIMOTO) 08-01-1986
- PATENT ABSTRACTS OF JAPAN, Band 10, Nr. 191 (M-495)[2247], 4. Juli 1986; & JP-A-61 35 927 (TOSHIBA MACH. CO., LTD) 20-02-1986
- PATENT ABSTRACTS OF JAPAN, Band 8, Nr. 191 (M-322)[1628], 4. September 1984; & JP-A-59 83 622 (TOSHIBA KIKAI K.K.) 15-05-1984

## Beschreibung

Die Erfindung betrifft eine Vorrichtung nach dem Oberbegriff des Anspruches 1.

Schlitzdüsen werden beispielweise für das Beschichten von Trägermaterialien oder zum Herstellen von Filmen, Folien, Platten oder Profilen eingesetzt und gehören seit langem zum Stande der Technik. Ihr Düsenspalt muß partiell verengt oder erweitert werden können, um über die gesamte -- quer zur Förderrichtung des Extrudierproduktes oder Extrudates verlaufende -- Düsenlänge eine gewünschte Dicke des Extrudates zu gewährleisten; ein maßlich ganz exakt ausgebildeter Düsenspalt gibt noch keine Gewähr für eine über die Düsenlänge gleichbleibende Dicke des Extrudates. Unterschiedliche thermische Zustände innerhalb der Schmelze aus Kunststoff verursachen Verdünnungen oder Verdickungen am Extrudat. Diese wiederum beeinträchtigen die Qualität des erzeugten Produktes oder Gutes.

Die Dicken des mittels einer Breit-, Profil- oder Rundschlitzdüse erzeugten Extrudates können mit Schichtdicken- bzw. Dicken-Meßgeräten gemessen werden. Bei Materialien, die man beschichtet oder extrudiert, wird die Dicke des Extrudates -- bzw. das Dickenprofil -- kontinuierlich über die Extrudatbreite gemessen. Übliche Meßgeräte können die am Profil ermittelten Werte optisch oder graphisch mittelbar aufzeigen und somit die genaue Position wie auch die Größe der Abweichung von der Solldicke wiedergeben.

An den neueren Schlitzdüsen ist -- wie US-A-3,039,143 verdeutlicht -- zumindest eine Lippe flexibel, also biegsam. Um eine Bewegung dieser flexiblen Lippe -- unter Veränderung der Spaltweite -- zu erreichen, sind bei bekannten Vorrichtungen Elemente eingesetzt, die über eine wärme-, spannungs- oder stromabhängige Längenänderung die Form der mit ihnen verbundenen Lippe beeinflussen können. Im Bereich der flexiblen Lippe werden in die Vorrichtung Elemente -- im Falle des Einsatzes von Wärme Metallbolzen -- eingesetzt. Die genannten Metallbolzen werden durch die Wärme (von innen oder außen) gedehnt, also verlängert, oder durch Abkühlen wieder verkürzt werden. Erkennt man aufgrund der Messung, daß in diesem oder jenem Bereich eine Korrektur der Extrudatdicke notwendig ist, kann an bestimmten Stellen durch Aktivierung des entsprechenden Elementes eine Veränderung der Spaltweite vorgenommen werden. Dazu muß die flexible Lippe gedrückt und auch gezogen, also geschlossen und geöffnet, werden können.

Die in engem Abstand über die Düsenlänge verteilten Elemente sind während des Arbeitsprozesses stets in der gleichen Position zu den Meßpunkten des Meßgerätes. So kann das Meßsystem einen Korrekturbefehl an das jeweils zuständige Element geben.

In der Anlaufphase eines Fertigungsprozesses sind überlicherweise größere Korrekturen erforderlich, welche auch zeitlich die eigentliche Produktion verzögern und vor allem ein weniger oder nicht brauchbares Extrudat ergeben. Während der Produktion sind meist geringe Veränderungen zu korrigieren.

Im Falle einer Unterbrechung des Fertigungsprozesses -- beispielweise wegen Materialmangels, wegen Maschinenstörungen oder infolge geringer Losgrößen -- muß der Extruder ausgefahren und in seiner Leistung zurückgenommen werden. Dabei wird die thermisch regulierende Automatik gestört; selbst bei kurzzeitigen Unterbrechungen wird dieses System labil,

Zudem muß bei der beschriebenen thermischen Regulierung der Metallbolzen stets in einem gewissen temperierten, also erhitzten Zustand gehalten werden, um für eine erforderliche Öffnung des Düsenspaltes nachgeben zu können - die Temperatur muß verringert werden, um die Bolzenlänge verkürzen zu können. Zur Beschleunigung dieses Verkürzungsvorganges durch Temperaturrückgang werden alle Bolzen stets mit Kühlluft umspült für den Fall, daß der eine oder andere der Bolzen kühler werden muß. Dies hat einen beträchtlichen Aufwand an kontinuierlich zuzuführender und zu vernichtender Energie zur Folge.

Eine Vorrichtung der eingangs beschriebenen Art zeigt US-A-3,039,143 mit einem Bolzen als Verstelleinrichtung, der mit seinem Gewindekopf im Düsenkörper lagert und dessen federnd gelagerter Gewindeschaft in eine Verstellmutter des Hebelarmes eingreift. Gemäß US-A-4,125,350 drücken langschaftige Schraubbolzen unmittelbar auf einen Vorsprung der beweglichen Lippe der Schlitzdüse.

Angesichts dieser Gegebenheiten hat sich der Erfinder das Ziel gesetzt, bei einer Vorrichtung der eingangs erwähnten Art eine exakte Weiteneinstellung über die gesamte Länge des Düsenspaltes auf automatischen Wege bei geringstem Energieverbrauch zu ermöglichen.

Zur Lösung dieser Aufgabe führt die Lehre des Patentanspruches 1.

Mehrere durch schmale Querschlitze voneinander getrennte Hebelarme oder Biegestege -- in einem bevorzugten Ausführungsbeispiel etwa zehn -- werden durch die Getriebestange mittels ihrer Verstelleinrichtungen eingestellt, so daß der an den Hebelarm kopfseitig angeformte Bereich der Flankenfläche i.w. um jene konstruktive Drehachse in sehr geringem Maße drehbar ist. Es wird erkennbar, daß auf diese Weise eine günstige und sehr differenzierte Einstellung der Schlitzbreite möglich wird.

Statt der aus einer Platte des Düsenkörpers herausgeschnittenen Hebelarme können im Rahmen der Erfindung auch andere eingesetzt werden, die z.B. an die flexible Flankenfläche angeschraubt oder mit ihr verschweißt werden, und/oder die aus mehreren Teilstücken zusammengesetzt sind. Wesentlich ist nur, daß die Spaltverstellung über das Hebelsystem erfolgen kann, das eine Untersetzung des Verstellweges erlaubt und zudem eine exakte mechanische Fixierung des Düsenspaltes gewährleistet.

Am freien Ende des Hebelarmes entspricht dessen querschnittliche Dicke bevorzugt etwa dem doppelten bis dreifachen Maß der Breite des Schlitzes. Letztere begrenzt nach oben hin die Auslenkung des Hebelarmes, ist aber so breit gewählt, daß der Hebelarm den Düsenkörper auch bei maximaler Auslenkung nicht berührt.

Nach dem Stande der Technik ist es dank der Stellschraube/n möglich, jeden der Hebelarme von Hand in die gewünschte Position zu bringen. Da aber erfindungsgemäß eine automatische Regelung vorgesehen wird, ist erfindungsgemäß an jeder Stellschraube bzw. an jedem Bolzen ein Zahnkranz vorhanden, der in die Bewegungsbahn eines in Düsenlängsrichtung verschieblichen Spindelrades einragt. Je nach Stellung des Spindelrades kämmt dieses mit einem der Zahnkränze.

Von besonderer Bedeutung ist ein auf den Schaft der Stellschraube aufgeschobener und darauf fixierbarer Zahnkranz; zwischen ihm sowie dem Schraubenkopf ist das freie Ende des Hebelarmes fixiert festlegbar.

Nach einem weiteren Merkmal der Erfindung ist das Spindelrad an einer Getriebestange der Schlitzdüse axial verfahrbar und mit der Getriebestange zu drehen. Auch diese Tätigkeit kann durch Drehen der Getriebestangen für Schlitten und Spindelrad von Hand vorgenommen werden. Dazu hat es sich als günstig erwiesen, die Zähne des Zahnkranzes bzw. die Gänge des Spindelrades -- querschnittlich gesehen -- endwärts spitz zulaufen zu lassen.

Um zu vermeiden, daß beim Verfahren des Spindelrades dieses aus dem Zugriffbereich der Zahnkränze herausgehoben werden muß, ist vom Spindelrad -- zumindest -- ein segmentartiger Abschnitt abgetrennt, so daß sich eine den Umfang unterbrechende Fläche ergibt, die in Fahrstellung des Spindelrades in geringem Abstand zu der/ den Zahnkranz/Zahnkränzen verläuft. Dadurch gibt es eine bestimmte Fahrstellung für das Spindelrad, welches aus dieser herausgeschwenkt und an einen der Zahnkränze herangeführt wird.

Das Spindelrad ist in einem Schlitten angeordnet, der an parallel zum Düsenspalt verlaufenden Führungsstangen verfahrbar ist und durch eine Getriebestange bewegt wird, welche mit einem Außengewinde in ein Innengewinde des Schlittens eingreift. Es wird deutlich, daß sowohl diese Gewindepaarung und ihre konstruktive Ausführung als auch die Gangzahl und Ganghöhe von Spindelrad und Zahnkranz Teilkomponenten der Steuerung der Verstelleinrichtung für die Hebelarme sind.

Die beiden Getriebestangen für den Schlitten einerseits und das Spindelrad anderseits werden bevorzugt durch einen gemeinsamen Elektromotor angetrieben, der von der einen oder anderen Getriebestange abgekuppelt werden kann. Erfindungsgemäß ist die Drehbewegung dieses Elektromotors durch Drehimpulsgeber gesteuert. Jedoch ist es auch denkbar, jede der Getriebestangen mit einem separaten Antrieb zu versehen.

Die Position jeder Stellschraube entspricht einer bestimmten Summe von elektrischen Impulsen. Entsprechend deren Anzahl kann jede Position des Spindelrades beliebig genau angesteuert werden (Positionierantrieb). Die Anzahl der Umdrehungen wird durch die Größe des Stellsignals bestimmt. Hat das Spindelrad die angesteuerte Position erreicht, wird im Falle eines gemeinsamen Antriebes dieser von der Spindelstange für den Schlitten auf die Getriebestange für das Spindelrad umgekuppelt. Dieses Kuppeln erfolgt elektromagnetisch.

Bezüglich weiterer Merkmale wird auf die Unteransprüche sowie die Beschreibung des in der Zeichnung dargestellten Ausführungsbeispiels hingewiesen.

Mit den beschriebenen System ist es möglich, in Abhängigkeit von der Größe der Soll/Ist-Differenz für die Dicke des entstehenden Filmes über das Meßsystem die erforderliche Anzahl der Spindelradumdrehungen vorzubestimmen und damit sehr schnell den Dicken-Ist-Wert zu erreichen.

Wesentliche Vorteile der beschriebenen Vorrichtung sind u.a. die folgenden:
* Unmittelbare, direkte, mechanische Verstellung der bewegbaren Flankenfläche;
* sehr kurze Einstellzeit durch unverzüglichen Eingriff - ohne nennenswerte Zeitverschiebung (Sekunden) zwischen direktem Meßergebnis, Korrekturbefehl und Korrektur (die Reaktion liegt innerhalb eines Meßintervalls der Meßanlage);
* unveränderliche Selbsthaltung des eingestellten Düsenspaltes (kein Nachschwingen, auch keine thermischen Einflüsse);
* das System kann stufenweise ausgebaut werden von Handbetrieb auf halbautomatischen oder gar auf vollautomatischen Antrieb mit Computeranschluß;
* die Länge der Hebelarme bzw. Biegestege erlaubt eine feinstufige Einstellung und wirkt schwingungsdämpfend, dies sowohl thermisch als auch mechanisch.

Darüberhinaus kann der überwiegende Teil der mechanischen Einzelteile von automatischen Werkzeugmaschinen hergestellt werden.

Von ganz besonderer Bedeutung ist der geringe Energiebedarf, da z.B. gegenüber dem Stande der Technik eine Dauerbeheizung sowie eine Kühlung von Bolzen entfällt.

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in
- Fig. 1: eine Schrägsicht auf eine schematisiert dargestellte Breitschlitzdüse;
- Fig. 2: den vergrößerten Querschnitt durch Fig. 1 nach deren Linie II-II;
- Fig. 3: eine teilweise geschnittene Seitenansicht der Breitschlitzdüse;
- Fig. 4: ein vergrößertes Detail zu Fig. 3;
- Fig. 5: einen Ausschnitt aus einer Draufsicht der Fig. 3.

Über einen bei 10 angedeutete Laufweg einer aus Gründen der Übersichtlichkeit nicht weiter dargestellten Folienbahn ist eine blockartige Schlitzdüse 12 einer Düsenlänge a und einer Düsenbreite b von hier beispielsweise 280 mm angeordnet, durch deren Düsenkörper 14 heiße Schmelze zu einem Düsenspalt 16 gelangt.

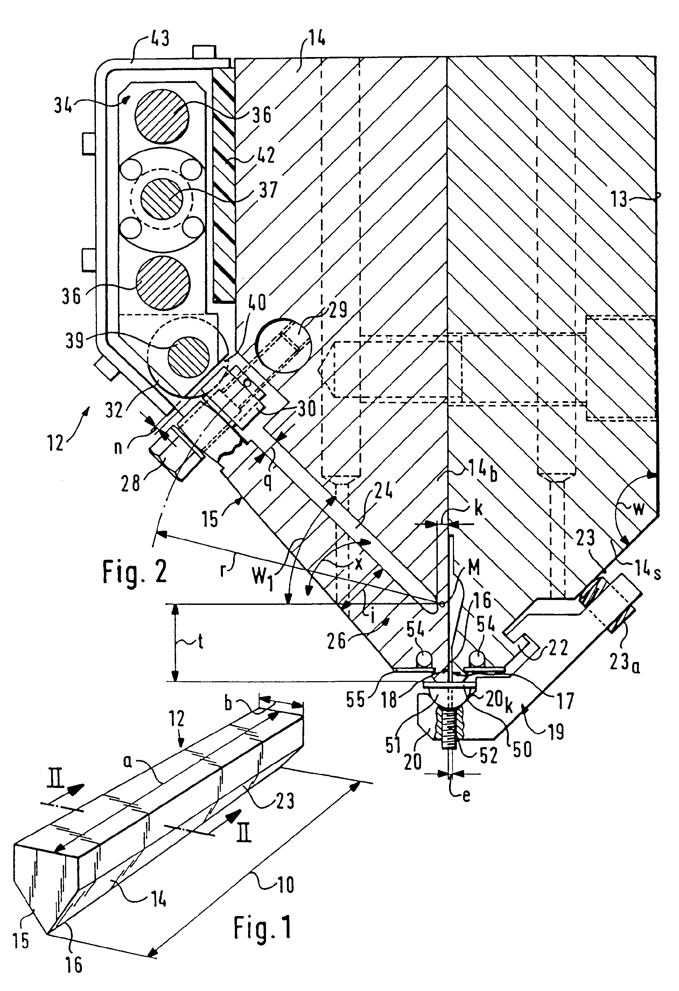

Der Düsenkörper 14 weist nach Fig. 2 zwei Düsenkörperhälften 14_{b}, 14ₛ auf, und der Düsenspalt 16 wird von einer feststehenden Flankenfläche 17 der rechten Düsenkörperhälfte 14ₛ einerseits sowie einer einstellbaren Flankenfläche 18 der linken Düsenkörperhälfte 14_{b} begrenzt. Der Abstand e der beiden Flankenflächen 17, 18 voneinander bestimmt die Spaltweite des Düsenspaltes 16.

Unterhalb des Düsenspaltes 16 ist in Fig. 2 ein Dichtstreifen 50 aus hitzebeständigem, flexiblem Werkstoff zu erkennen, welche wahlweise einen Abschnitt der Düsenspaltlänge abdeckt. Der Dichtstreifen 50 lagert auf einer Andrückleiste 51 teilkreisförmigen Querschnittes. Diese ist mittels Schraubstiften 52 an Spannstege 19 angeschlossen, in dessen Hakenkopf 20 sie ruht; die polygone Kante 20ₖ des Hakenkopfes 20 gewährleistet den festen Sitz der profilartigen Andruckleiste 51. Im übrigen kann diese dank der Schraubstifte 52 partiell bezüglich des Anpressdruckes nachgestellt werden.

Die Spannsteg 19 unterfängt einerseits die Andrückleiste 51 mit seinem Hakenkopf 20 und hintergreift anderseits einen Vorsprung 22 der benachbarten Düsenkörperhälfte 14ₛ, zwischen dem und einer Anlagefläche 23 dieser Düsenkörperhälfte 14ₛ er mittels Schrauben 23ₐ verspannt ist.

Sowohl die Anlagefläche 23 als auch die untere Begrenzungsfläche 15 der anderen Düsenkörperhälfte 14_{b} sind zum Düssenspalt 16 hin in einem Winkel w zur vertikalen Düsenaußenfläche 13 geneigt. Außerdem sind zur besseren Temperaturverteilung beidseits des Düsenspaltes 16 und nahe den Flankenflächen 17, 18 Lippenheizelemente 54 vorgesehen, die durch Laschen 55 gehalten werden.

Aus der in Fig. 2 linken Düsenkörperhälfte 14_{b} ist in einem Abstand i von deren unteren Begrenzungsfläche 15 mittels eines Längsschlitzes 24 eine einends angeformte Platte herausgeschnitten, aus der durch Querschlitze 25 mehrere Hebelarme oder Biegestege 26 hergestellt worden sind. Jeder Längsschlitz 24 sowie die Querschlitze 25 mit ihren Schlitztiefstem enden in sehr geringem Abstand k von der bewegbaren Flankenfläche 18.

Von einem Punkt M zwischen Flankenfläche 18 und Schlitztiefstem liegt ein Punkt M, der sich in Fig. 2 in einem Abstand t vom freien Lippenende der Flankenfläche 18 befindet sowie von einer Längsrichtung verlaufenden gedachten Drehachse M durchsetzt wird, um die ist freie Lippenende der Flankenfläche 18 begrenzt auslenkbar ist. Der Neigungswinkel Wₗ des Längsschlitzes 24 zu einer durch den Punkt M gelegten Horizontalen beträgt etwa 45°.

Von jenem Punkt M geht ein Biegeradius r aus; jeder Biegesteg 26 ist unter Änderung der oberen Breite q des Längsschlitzes 24 mittels einer im Düsenkörper 14 endenden Stellschraube 28 begrenzt in Pfeilrichtung x auslenkbar.

Bei dieser Auslenkbewegung wird die mit dem Biegesteg 26 einstückige angeformte Flankenfläche 18 verstellt - und mit ihr in diesem Bereich die Spaltweite e des Düsenspaltes 16; durch Verdrehen der jeweiligen Stellschraube 28, wird deren Ende in einem Gewindeloch 29 des Düsenkörpers 14 oder einem in diesen eingesetzten Mutter od.dgl. drehbar lagert, wird am freien Ende des Biegestabes 26 in beschriebener Weise Druck bzw. Zug erzeugt. Am Schaft dieser Stellschraube 28 ist ein Zahnkranz 30 festgelegt, mit einem über ihm verfahrbaren Spindelrad 32 in Abhängigkeit von dessen jeweiliger Stellung kämmen kann. Das freie Ende des Biegesteges 26 ist zwischen dem Kopf der Stellschraube 28 und dem Zahnkranz 30 spielfrei festgelegt.

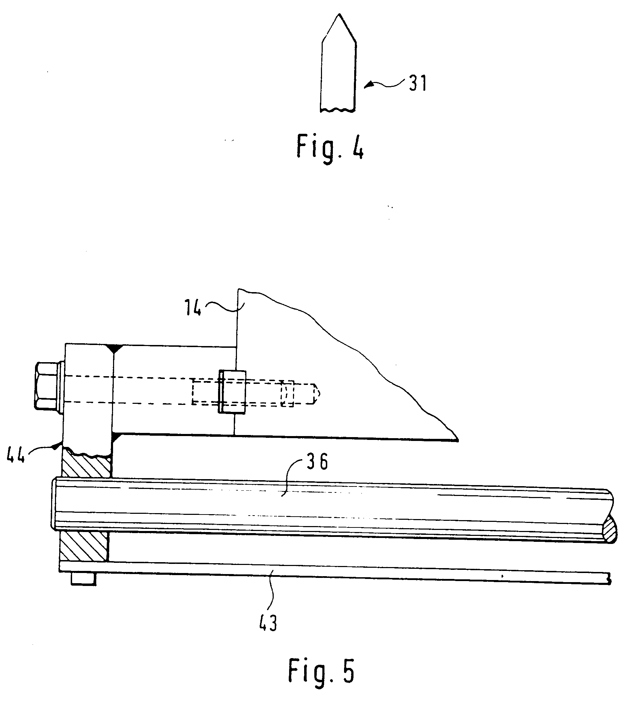

Um eine hohe Betriebssicherheit der miteinander kämmenden Teil Zahnkranz 30/Spindelrad 32 zu gewährleisten, sind die Zähne 31 bzw. die Spindelradgänge gemäß Fig. 4 endwärts zugespitzt.

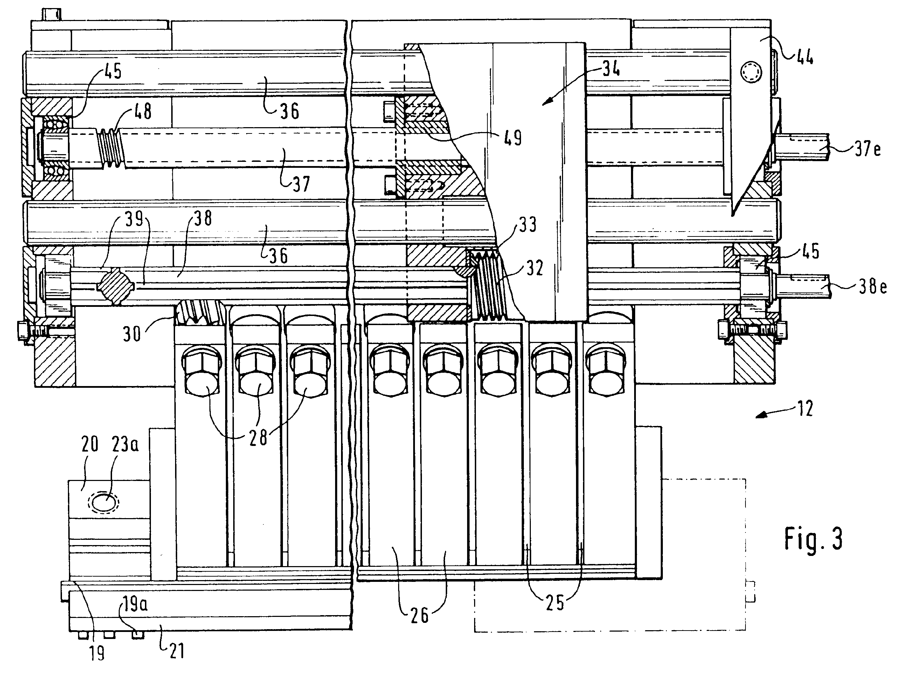

Das Spindelrad 32 ist in einer Ausnehmung 33 eines Schlittens 34 untergebracht, der auf Führungsstangen 36 über den freien Enden der Biegestege 26 gleitbar ist. Mit 37 ist eine Spindelstange mit Außengewinde 48 für den Schlitten 34 bezeichnet, dessen Innengewinde bei 49 nur angedeutet ist. Durch das Spindelrad 32 verläuft etwa rechtwinklig zu den Stellschrauben 28 eine Getriebestange 38, die im gewählten Ausführungsbeispiel mit vier Längsrippen 39 versehen ist; diese greifen als Mitnehmer in nicht erkennbare Nuten des Spindelrades 32 eingreifen. Sowohl die Spindelstange 37 als auch die Getriebestange 38 sind über Antriebsenden 37e bzw. 38e an einen in Fig. 3 nicht erkennbaren Antrieb anzuschließen.

Wie Fig. 2 erkennen läßt, ist vom Spindelrad 32 unter Erzeugung einer Sehnenfläche ein Segment abgetrennt, so daß in der gezeigten Fahrstellung des Spindelrades 32 dieses sich oberhalb der Zahnkränze 30 -- und zu diesen in geringem Spaltabstand n -- frei bewegen kann. Bei einer nicht gezeigten Ausführung können auch mehrere Segmente vom Spindelrad 32 abgetrennt sein.

Der zum Düsenkörper 14 hin bei 42 wärmeisolierte Schlitten 32 wird durch ein Profil 43 abgedeckt und kann mittels der Spindelstange 37 sowie eines Schrittmotors schnell und exakt über die Zahnkränze 30 geführt werden. Der gleiche Antrieb dreht das Spindelrad 32 - bei dessen Eingriff in den jeweils darunterliegenden Zahnkranz 30 wird der entsprechende Biegesteg 26 -- und mit diesem der andernends angeformte Abschnitt der bewegbaren Flankenfläche 18 -- bzw. dessen Lippenende -- bewegt.

Fig. 4 verdeutlicht eine lösbare Halterung aus Lagerwinkeln 44 für die Führungsstangen 36 des Schlittens 34 sowie das Abdeckprofil 43 am Düsenkörper 14. In diesen Lagerwinkeln 44 sind auch Kugellager 45 für die Getriebestangen 37, 38 vorgesehen.

Die Bewegungsabläufe für den Schlittenvorschub und das Drehen des Spindelrades 32 können hier von einem einzigen Elektromotor gesteuert werden, dessen Drehbewegung wiederum von Drehimpulsgebern gesteuert ist. Statt eines gemeinsamen Antriebes mögen auch separate Antriebe für Spindelstange 37 und Getriebestange 38 vorgesehen werden.

Die Position jeder Stellschraube 28 entspricht einer bestimmten Summe von elektrischen Impulsen. Entsprechend der Anzahl der Impulse kann jede Position beliebig genau angesteuert werden.

Hat der Schlitten 34 -- dank der angetriebenen Spindelstange 37 -- mit dem Spindelrad 32 die angesteuerte Position erreicht, wird der Antrieb von der Spindelstange 37 auf die Getriebestange 38 elektromagnetisch umgekoppelt. Unverzüglich danach wird über die Getriebestange 38 mittels des Spindelrades 32 der Zahnkranz 30 um 360° gedreht. Entsprechend der Anzahl der Gänge des Spindelrades 32 dreht sich der mit ihm kämmende Zahnkranz 30 und bewegt dadurch axial die Stellschraube 28 sowie über diese das freie Ende des Biegesteges 26. Die Spaltveränderung ist so auf das kleinste Maß einstellbar.

Der Schlitten 34 verbleibt in der gewählten Position, bis das Meßergebnis der Korrektur bekannt ist. Die Zeitspanne zwischen den Korrektureingriffen ist von der Position der Stellschraube 28 und der Traversiergeschwindigkeit des Meßkopfes abhängig. Die Schlittenbewegung ist schneller als diese Traversiergeschwindigkeit des Meßinstrumentes und somit liegt die Reaktionszeit dieses Systems innerhalb des Meßintervalls.

Das beschriebene Öffnen oder Schließen der Spaltweite e wird ausschließlich durch die Drehrichtung des Spindelrades 32 bewerkstelligt, also durch eine Richtungsänderung des Antriebes.

Die Stellschraube 23 wird also entweder hinein- oder herausgedreht, die bewegbare Flankenfläche oder Lippe 18 nach innen oder nach außen gedrückt, der Düsenspalt 16 mehr oder minder geöffnet oder geschlossen.

Mit der Anzahl der Gänge auf dem Spindelrad 32 und der Gewindesteigung des Zahnkranzes 30 bzw. der Stellschraube 28 kann das Maß der Korrekturbewegung größer oder kleiner gehalten werden.

Da mit dem beschriebenen Hebelsystem an sich bereits eine Untersetzung gegeben ist, zeigt sich die Korrekturgröße (Lippenweg je Segmentdrehung) als sehr klein.

## Patentansprüche

1. Vorrichtung zum Extrudieren von thermoplastifizierten Kunststoffen durch eine Schlitzdüse (12), insbesondere eine Breitschlitzdüse, deren Düsenspalt (16) von zwei Flankenflächen (17, 18) eines Düsenkörpers (14) bestimmt ist, deren eine als flexible Lippe ausgebildet sowie mit quer zum Düsenspalt (16) verlaufenden Hebelarmen (26) versehen ist, deren jeder zur Veränderung der Spaltweite (e) des Düsenspaltes (16) durch eine einends dem Düsenkörper (14) zugeordnete sowie ihn in Abstand zum Düsenspalt (16) durchsetzende Stellschraube od.dgl. mechanische Verstelleinrichtung (28) begrenzt verstellbar ausgebildet ist,
dadurch gekennzeichnet,
daß das Schraubenende der den Hebelarm (26) durchsetzenden Verstelleinrichtung (28) drehbar im Düsenkörper (14) lagert und die Verstelleinrichtung (28) mit einem radialen Mitnehmer (30) versehen ist, der mit Mitnehmern weiterer Verstelleinrichtungen zum Verstellen der angeschlossenen Hebelarme (26) um eine zum Düsenspalt (16) parallel gedachte Drehachse (M) durch eine drehende Getriebestange (38) od.dgl. strangartiges Steuerelement verbunden ist.

2. Vorrichtung nach Anspruch 1, dadurch gekennzeichnet, daß das Schraubenende drehbar in einem Einsatz (29) des Düsenkörpers (14) lagert.

3. Vorrichtung nach Anspruch 1 oder 2, dadurch gekennzeichnet, daß die Hebelarme (26) durch einen im Düsenkörper (14) verlaufenden Sackschlitz (24) und diesen kreuzende Querschlitze (25) gebildet sind, wobei die Getriebestange (38) od.dgl. Steuerelement etwa in der Flucht des Sackschlitzes in Abstand zu diesem verläuft.

4. Vorrichtung nach Anspruch 1 oder 3, dadurch gekennzeichnet, daß sich die Schlitzdüse zu ihrem Düsenspalt (16) hin verjüngt und/oder der Sackschlitz (24) geneigt verläuft.

5. Vorrichtung nach einem der Ansprüche 1 bis 4, dadurch gekennzeichnet, daß an der als flexible Lippe ausgebildeten Flankenfläche (18) ein Hebelarm (26) angreift, der aus mehreren Teilen oder Abschnitten zusammengesetzt ist.

6. Vorrichtung nach einem der Ansprüche 1 bis 5, dadurch gekennzeichnet, daß die Stellschraube (28) als Mitnehmer einen Zahnkranz (30) trägt, der in die Bewegungsbahn eines in Düsenlängsrichtung verschieblichen sowie mit der Getriebestange drehbaren Spindelrades (32) kämmbar einragt, wobei gegebenenfalls das Spindelrad (32) in seiner Steuerstellung in den Zahnumfang jeweils eines Zahnkranzes (30) der Schlitzdüse (12) kämmend einsetzbar ist.

7. Vorrichtung nach Anspruch 6, dadurch gekennzeichnet, daß das Spindelrad (32) an der Getriebestange (38) an der Schlitzdüse (12) axial verfahrbar sowie mit der Gewindestange drehbar ist.

8. Vorrichtung nach Anspruch 6 oder 7, dadurch gekennzeichnet, daß am Spindelrad (32) durch einen segmentartigen Abschnitt eine den Umfang des Spindelrades unterbrechende Fläche (40) hergestellt ist, die in Fahrstellung des Spindelrades in geringem Abstand zu der/den Zahnkranz/Zahnkränzen (30) verläuft, wobei gegebenenfalls mehrere segmentartige Abschnitte am Umfang des Spindelrades (32) vorgesehen sind.

9. Vorrichtung nach wenigstens einem der Ansprüche 1 bis 8, dadurch gekennzeichnet, daß die Getriebestange (38) mit wenigstens einer Ein- oder Ausformung (39) ausgestattet ist, welche in eine Aus- oder Einformung des Spindelrades (32) eingreift.

10. Vorrichtung nach wenigstens einem der Ansprüche 1 bis 9, dadurch gekennzeichnet, daß das Spindelrad (32) in einem gegebenenfalls in einem Gehäuse (42) verfahrbaren Schlitten (34) vorgesehen und dieser an Führungsstangen (36) in Düsenlängsrichtung verfahrbar ist, wobei gegebenenfalls eine mit Außengewinde (41) versehene Getriebestange (37) mit einem Gegengewinde des Schlittens (34) kämmt und dessen Schlittenbewegung steuert.

11. Vorrichtung nach wenigstens einem der Ansprüche 1 bis 10, dadurch gekennzeichnet, daß die Getriebestangen (37, 38) von Schlitten (34) und Spindelrad (32) mit jeweils einem eigenen Antrieb versehen sind, und/oder daß die Getriebestangen (38 und 37) von Spindelrad (32) und Schlitten (34) an einen gemeinsamen Antrieb angeschlossen sind.

12. Vorrichtung nach wenigstens einem der Ansprüche 1 bis 11, dadurch gekennzeichnet, daß der gegebenenfalls jeweils an eine der Getriebestangen (37 bzw. 38) ankuppelbare Antrieb ein Elektromotor ist, dessen Drehbewegung durch Drehimpulsgeber gesteuert ist.

13. Vorrichtung nach wenigstens der Ansprüche 1 bis 12, gekennzeichnet durch eine Meßeinrichtung, mit der die Schichtdicke des Extrudates feststellbar und mit einem Sollmaß vergleichbar ist, wobei die Ist/Soll-Differenz als Signal für die Steuerung des Antriebes eingesetzt ist.

14. Vorrichtung nach wenigstens einem der Ansprüche 1 bis 13, dadurch gekennzeichnet, daß der Düsenspalt (16) durch wenigstens einen Dichtstreifen (50) abschnittsweise abdeckbar ist, wobei letzterer einer Andrückleiste (51) aufliegt und wobei gegebenenfalls die Andrückleiste (51) am Düsenspalt (16) durch wenigstens einen Spannsteg (19) od.dgl. gehalten ist, der als Lagerteil für die Andrückleiste (51) teilkreisförmigen Querschnittes eine polygone Kante (20k) aufweisen kann.

15. Vorrichtung nach wenigstens einem der Ansprüche 1 bis 14, dadurch gekennzeichnet, daß der Spannsteg (19) zum einen an der Andrückleiste (51) sowie zum anderen an einem von ihm hintergriffenen Vorsprung (22) des Düsenkörpers (14) anliegt, wobei eine Stellschraube (23a) den Spannsteg am Düsenkörper verspannt, und/oder daß Dichtstreifen (50), Andrückleiste (51) und Spannsteg (19) konstruktiv von der flexiblen Flankenfläche (13) getrennt sind.

## Claims

1. Apparatus for extruding thermoplasticised plastics through a slot die (12), in particular a fishtail die, of which the die orifice (16) is defined by two flank surfaces (17, 18) of a die body (14), one of which is constructed as a flexible lip and also provided with lever arms (26) which extend transversely to the die orifice (16) and each of which is adjustable to a limited extent to vary the width (e) of the die orifice (16) by an adjusting screw or the like mechanical adjusting device (28) associated at one end with the die body (14) and passing through it at a distance from the die orifice (16), characterised in that the screw end of the adjusting device (28) passing through the lever arm (26) is mounted rotatably in the die body (14), and the adjusting device (28) is provided with a radial driver (30) which is connected by a rotating gear rod (38) or the like rail-like control element to drivers of additional adjusting devices for adjusting the connected lever arms (26) about an imaginary axis of rotation (M) parallel to the die orifice (16).

2. Apparatus according to claim 1, characterised in that the screw end is mounted rotatably in an insert (29) of the die body (14).

3. Apparatus according to claim 1 or 2, characterised in that the lever arms (26) are formed by a blind slot (24) extending in the die body (14) and transverse slots (25) intersecting the blind slot, wherein the gear rod (38) or the like control element extends approximately in alignment with the blind slot at a distance therefrom.

4. Apparatus according to claim 1 or 3, characterised in that the slot die tapers towards its die orifice (16) and/or the blind slot (24) extends at an angle.

5. Apparatus according to any of claims 1 to 4, characterised in that the flank surface (18) constructed as a flexible lip is engaged by a lever arm (26) which is composed of several portions or sections.

6. Apparatus according to any of claims 1 to 5, characterised in that the adjusting screw (28) carries as the driver a gear rim (30) which extends, in such a way as to allow meshing, into the path of travel of a spindle wheel (32) which is slidable in the longitudinal direction of the die and rotatable with the gear rod, wherein if occasion arises the spindle wheel (32) in its control position can be inserted in meshing relationship in the toothed periphery of a gear rim (30) of the slot die (12).

7. Apparatus according to claim 6, characterised in that the spindle wheel (32) is axially movable on the gear rod (38) on the slot die (12) and also rotatable with the threaded rod.

8. Apparatus according to claim 6 or 7, characterised in that on the spindle wheel (32) by a segment-like section there is formed a surface (40) which interrupts the periphery of the spindle wheel and which in the travelling position of the spindle wheel extends at a short distance from the gear rim(s) (30), wherein if occasion arises several segment-like sections are provided at the periphery of the spindle wheel (32).

9. Apparatus according to one or more of claims 1 to 8, characterised in that the gear rod (38) is provided with at least one recess or projection (39) which engages in a projection or recess of the spindle wheel (32).

10. Apparatus according to one or more of claims 1 to 9, characterised in that the spindle wheel (32) is provided in a carriage (34) which is movable if occasion arises in a housing (42), and the carriage (34) is movable on guide rods (36) in the longitudinal direction of the die, wherein if occasion arises a gear rod (37) provided with an external thread (41) meshes with a mating thread of the carriage (34) and controls the carriage movement thereof.

11. Apparatus according to one or more of claims 1 to 10, characterised in that the gear rods (37, 38) of carriage (34) and spindle wheel (32) are in each case provided with an independent drive, and/or in that the gear rods (38 and 37) of spindle wheel (32) and carriage (34) are connected to a common drive.

12. Apparatus according to one or more of claims 1 to 11, characterised in that the drive which if occasion arises can be coupled in each case to one of the gear rods (37 or 38) is an electric motor, the rotary movement of which is controlled by angular momentum generators.

13. Apparatus according to one or more of claims 1 to 12, characterised by a measuring device with which the layer thickness of the extrudate can be detected and compared with a nominal size, wherein the difference between actual and nominal values is used as the signal for control of the drive.

14. Apparatus according to one or more of claims 1 to 13, characterised in that the die orifice (16) can be covered in sections by at least one sealing strip (50), wherein the latter rests on a pressure bar (51) and wherein if occasion arises the pressure bar (51) is held on the die orifice (16) by at least one clamping strap (19) or the like which as a mounting member for the pressure bar (51) of partially circular cross-section may comprise a polygonal edge (20k).

15. Apparatus according to one or more of claims 1 to 14, characterised in that the clamping strap (19) contacts on the one hand the pressure bar (51) and on the other hand a projection (22) of the die body (14) behind which the strap engages, wherein an adjusting screw (23a) braces the clamping strap on the die body, and/or in that sealing strip (50), pressure bar (51) and clamping strap (19) are structurally separate from the flexible flank surface (13).

## Revendications

1. Dispositif pour l'extrusion de matières thermoplastiques à l'état ramolli, au travers d'une filière à fente (12), notamment une filière à fente large, dont l'ajutage de filière (16) est déterminé par deux surfaces de flanc (17, 18) d'un corps de filière (14), dont l'une est réalisée sous la forme d'une lèvre flexible et est pourvue de bras de levier (26) s'étendant transversalement à l'ajutage de filière (16), chacun de ces bras étant conçu de façon à pouvoir être déplacé de manière limitée par une vis de réglage ou un dispositif de réglage mécanique analogue (28) qui le traverse à distance de l'ajutage de filière (16),et dont l'une des extrémités coopère avec le corps de filière (14), en vue de modifier la largeur de fente (e) de l'ajutage de filière (16), caractérisé en ce que l'extrémité de la vis du dispositif de réglage (28) traversant le bras de levier (26), est montée tournante dans le corps de filière (14), et le dispositif de réglage (28) est pourvu d'un entraîneur radial (30) qui est relié à des entraîneurs d'autres dispositifs de réglage pour le déplacement des bras de leviers (26) associés autour d'un axe de rotation fictif (M) parallèle à l'ajutage de filière (16), par une tige de transmission rotative (38) ou un élément de commande rotatif analogue en forme de barre.

2. Dispositif selon la revendication 1, caractérisé en ce que l'extrémité de la vis est montée tournante dans un insert (29) du corps de filière (14).

3. Dispositif selon la revendication 1 ou 2, caractérisé en ce que les bras de levier (26) sont formés par une fente borgne (24) s'étendant dans le corps de filière (14), et par des fentes transversales (25) qui la croisent, la tige de transmission (38) ou l'élément de commande analogue s'étendant sensiblement dans l'alignement de la fente borgne et à distance de celle-ci.

4. Dispositif selon la revendication 1 ou 3, caractérisé en ce que la filière à fente se rétrécit en direction de son ajutage de filière (16) et/ou la fente borgne (24) s'étend de manière inclinée.

5. Dispositif selon l'une des revendications 1 à 4, caractérisé en ce que sur la surface de flanc (18) réalisée en forme de lèvre flexible, agit un bras de levier (26) qui est composé de plusieurs parties ou tronçons.

6. Dispositif selon l'une des revendications 1 à 5, caractérisé en ce que la vis de réglage (28) porte en guise d'entraîneur une couronne dentée (30) qui s'engage avec engrènement dans la trajectoire de mouvement d'une roue filetée (32) pouvant coulisser dans la direction longitudinale de la filière et tourner avec la tige de transmission, la roue filetée (32) étant, le cas échéant, susceptible, dans sa position de commande, de s'introduire avec engrènement dans la périphérie dentée de chaque couronne dentée (30) de la filière à fente (12).

7. Dispositif selon la revendication 6, caractérisé en ce que la roue filetée (32) peut se déplacer axialement sur la tige de transmission (38) de la filière à fente (12), et peut tourner avec la tige de transmission.

8. Dispositif selon la revendication 6 ou 7, caractérisé en ce que sur la roue filetée (32) est réalisée, par un tronçon en forme de segment, une surface (40) qui interrompt la périphérie de la roue filetée et qui, dans la position de déplacement de la roue filetée, s'étend à faible distance de la/des couronne(s) dentée(s) (30), plusieurs tronçons en forme de segment étant éventuellement prévus sur la périphérie de la roue filetée (32).

9. Dispositif selon l'une au moins des revendications 1 à 8, caractérisé en ce que la tige de transmission (38) est équipée d'au moins un élément en forme de creux ou de saillie (39) qui s'engage dans un élément en forme saillie ou de creux de la roue filetée (32).

10. Dispositif selon l'une au moins des revendications 1 à 9, caractérisé en ce que la roue filetée (32) est prévue sur un chariot (34) qui peut se déplacer en direction longitudinale de la filière, le cas échéant dans un carter (42), sur des tiges de guidage (36), une tige de transmission (37) pourvue d'un filetage extérieur (41) coopérant, le cas échéant, avec un filetage conjugué du chariot (34) en assurant la commande du mouvement de ce chariot.

11. Dispositif selon l'une au moins des revendications 1 à 10, caractérisé en ce que les tiges de transmission (37, 38) du chariot (34) et de la roue filetée (32), sont pourvues chacune d'un propre dispositif d'entrainement, et/ou en ce que les tiges de transmission (38 et 37) de la roue filetée (32) et du chariot (34) sont reliées à un dispositif d'entraînement commun.

12. Dispositif selon l'une au moins des revendications 1 à 11, caractérisé en ce que le dispositif d'entraînement pouvant, le cas échéant, être couplé à l'une ou l'autre des tiges de transmission (37 ou 38), est un moteur électrique dont le mouvement de rotation est commandé par des générateurs d'impulsions de rotation.

13. Dispositif selon l'une au moins des revendications 1 à 12, caractérisé par un dispositif de mesure permettant de déterminer l'épaisseur de couche de l'extrudat et de la comparer à une valeur de consigne, la différence entre la valeur réelle et la valeur de consigne étant utilisée en guise de signal pour la commande du dispositif d'entraînement.

14. Dispositif selon l'une au moins des revendications 1 à 13, caractérisé en ce que l'ajutage de filière (16) peut être recouvert par tronçons, au moyen d'au moins une bande d'étanchéité (50), cette dernière reposant sur une baguette d'application (51), et la baguette d'application (51) étant, le cas échéant, maintenue contre l'ajutage de filière (16) par au moins un talon de serrage (19) ou analogue, qui peut comporter en guise de palier d'appui pour la baguette d'application (51) de section transversale en partie circulaire, un bord polygonal (20k).

15. Dispositif selon l'une au moins des revendications 1 à 14, caractérisé en ce que le talon de serrage (19) s'appuie d'une part contre la baguette d'application (51) et d'autre part contre une saillie (22) du corps de filière (14) qu'il saisit par l'arrière, une vis de réglage (23a) mettant en tension le talon de serrage par rapport au corps de filière, et/ou en ce que la bande d'étanchéité (50), la baguette d'application (51) et le talon de serrage (19) sont séparés du point de vue de la structure, de la surface de flanc flexible (18).
